**Europäisches Patentamt**

(19) **European Patent Office**

**Office européen des brevets**

(11) Numéro de publication: **0 1 1 2 2 1 0**
**B1**

# (12) FASCICULE DE BREVET EUROPEEN

(45) Date de publication du fascicule du brevet:
27.01.88

(21) Numéro de dépôt: **83402240.2**

(22) Date de dépôt: **22.11.83**

(51) Int. Cl.⁴: **B 29 C 51/14,** B 29 C 69/00

(54) **Procédé pour la fabrication d'un panneau composite moulé.**

(30) Priorité: **22.11.82 FR 8219494**

(43) Date de publication de la demande:
**27.06.84 Bulletin 84/26**

(45) Mention de la délivrance du brevet:
**27.01.88 Bulletin 88/4**

(84) Etats contractants désignés:
**AT BE CH DE GB IT LI LU NL SE**

(56) Documents cités:
**DE - A - 2 711 376**
**FR - A - 1 110 860**
**FR - A - 1 320 303**
**FR - A - 1 394 749**
**GB - A - 1 200 499**
**US - A - 3 472 730**
**US - A - 4 080 416**

**Kunststoff-Handbuch, Band X, Duroplaste, C. Hanser Verlag München 1968**
**Internationales Lexikon Textilveredelung & Grenzgebiete, A. Laumannsche Verlagsbuchhandlung 1975**

(73) Titulaire: **ISOVER SAINT-GOBAIN, Les Miroirs 18, avenue d'Alsace, F-92400 Courbevoie (FR)**

(72) Inventeur: **Jean, Yann, Les Garrignons Airion, F-60600 Clermont (FR)**
Inventeur: **Fugier, Roger, Rue de la Passerelle, F-60290 Rantigny (FR)**
Inventeur: **de Goys de Mezeyrac, Charles, 2 bis avenue Reberteau, F-60260 Lamorlaye (FR)**

(74) Mandataire: **Muller, René et al, SAINT-GOBAIN RECHERCHE 39, quai Lucien Lefranc, F-93304 Aubervilliers (FR)**

## Description

L'invention concerne un procédé de fabrication, par moulage en une seule passe, d'un panneau composite moulé comprenant un support en fibres discontinues de verre ou de roche, imprégnées d'un liant polymérisé et une feuille de revêtement d'aspect.

Des panneaux composites moulés de ce type sont par exemple des garnitures intérieures de pavillons de véhicules à moteur, où le support formé d'au moins une couche de fibres imprégnées d'une résine polymérisée joue le rôle d'un isolant acoustique et thermique alors qu'une feuille de revêtement apparent dite d'aspect généralement en tissu, orientée vers l'habitacle, donne un aspect esthétique au pavillon.

Des panneaux réalisés sur ce même principe peuvent également constituer l'habillage décoratif d'un local en lui apportant une isolation thermique et un traitement acoustique en étant appliqués sur les parois ou en constituant les éléments amovibles ou mobiles dans ces locaux. Ainsi, le capitonnage, les baffles, les paravents, les persiennes, les cloisons de séparation etc. peuvent être constitués d'éléments composites moulés ou revêtus d'éléments composites moulés.

Il est connu de fabriquer ces panneaux composites par un procédé dans lequel les différentes opérations sont successives. Ainsi on fabrique d'abord un primitif, c'est-à-dire un feutre de fibres imprégnées d'un liant non polymérisé, généralement une résine thermodurcissable. A cet effet, on pulvérise une composition aqueuse du liant sur les fibres lors de la formation du feutre. On forme ensuite le support du panneau composite par moulage d'un ou de plusieurs primitifs superposés, en faisant agir simultanément la chaleur et la pression. Au cours de cette opération de moulage, la chaleur sert à polymériser le liant et obtenir sa réticulation ou polycondensation complète dans le cas d'une résine thermodurcissable. La feuille de revêtement est ensuite appliquée sur le support semi-rigide, après que l'on a pulvérisé sur celui-ci et/ou sur la feuille de revêtement, une composition adhésive adéquate.

Cette fabrication par opérations successives montre plusieurs inconvénients. Elle nécessite plusieurs postes de travail et elle est donc coûteuse en main d'œuvre. La ligne de fabrication occupe une surface étendue à laquelle s'ajoute une aire de stockage importante. Ce type de fabrication nécessite des durées de réalisation importantes. De plus le rendement global de la ligne est faible.

On a proposé dans le brevet français 1 289 745 de fabriquer des panneaux composites moulés en une seule passe durant laquelle le liant de la couche de fibres est mûri pendant que la feuille de revêtement thermoplastique est gaufrée et en même temps fixée à la couche de fibres.

La feuille de revêtement thermoplastique se ramollit et se forme au cours du chauffage à la température élevée nécessaire à la polycondensation ou réticulation du liant, qui est de l'ordre de 200°C.

Un tel procédé en une seule passe n'avait pu être envisagé dans le cas où la feuille de revêtement est en tissu et en général en une matière sensible à la température élevée qui est nécessaire à la réticulation du liant, et/ou aux différentes attaques physico-chimiques de ce liant. Outre sa faible résistance à la chaleur, à savoir à des températures de l'ordre de 200°C pendant le temps nécessaire à la polycondensation, c'est-à-dire environ 3 minutes, la feuille de revêtement se trouve au cours de moulage au contact du primitif, donc du liant non polymérisé et subit des attaques physiques ou chimiques de ce dernier. En outre le procédé décrit dans le brevet français cité précédemment nécessite l'utilisation d'une feuille de revêtement étanche faisant barrière à la migration du liant. En effet, la pulvérisation du liant dans le cas des procédés traditionnels de fibrage et de formation du feutre peut provoquer des accumulations localisées du liant dues aux turbulences du fluide transporteur et la formation de mèches surchargées de liant. Les accumulations peuvent être à l'origine d'une migration du liant à travers un revêtement perméable tel que peut l'être un tissu et par là provoquer l'apparition de tâches à la surface apparente du revêtement.

Il est également connu, par le brevet FR 1 394 749 d'améliorer par trempage la répartition d'un liant dans une masse de fibres continues, en les entremêlant préalablement mécaniquement, en vue d'un moulage en une seule passe pour l'obtention d'un panneau composite, lesdites fibres pouvant être renforcées par une matière de renforcement formant revêtement. Mais ce document ne concerne pas les fibres discontinues.

L'invention obvie aux inconvénients cités et propose un nouveau procédé de moulage en une seule passe pour la fabrication d'un panneau composite comprenant un support en fibres discontinues imprégnées d'un liant, notamment une résine thermodurcissable, et une feuille de revêtement d'aspect, notamment en tissu, relativement fragile vis-à-vis de la température et/ou du liant non polymérisé.

Selon l'invention, on prépare un primitif en imprégnant par trempage, par un liant non polymérisé en vue d'obtenir un primitif ayant un taux de liant de 10 à 30% en poids environ de l'extrait sec total, au moins une couche de fibres liées par un liant polymérisé, obtenue par pulvérisation sur les fibres d'une solution du liant non polymérisé au cours de la formation de la couche de fibres, suivie de la polymérisation du liant, le taux de liant polymérisé étant d'environ 2,5% en poids de la couche de fibres liées, qu'on place le primitif sur la feuille de revêtement d'aspect, qu'on presse le tout en chauffant pour obtenir le panneau composite par polymérisation du liant et collage des éléments entre eux.

Le trempage pour l'obtention du primitif selon l'invention permet une répartition homogène du liant dans le feutre, et évite son accumulation en certains endroits comme c'est le cas lors d'une imprégnation par une pulvérisation du liant. Cette répartition homogène permet de réduire la durée du pressage à la durée minimale de polymérisation. Elle évite non seulement la détérioration de la feuille de revêtement par la chaleur, mais aussi les taches dues à une accumulation du liant non polymérisé. En outre, la technique du trempage connue en soi, par exemple par le brevet US 2 698 260, permet d'ajuster très précisément le taux de liant contenu dans le primitif et de là dans le produit final, car cette technique permet d'agir sur différents paramètres tels la concentration de la solution déversée, la durée d'imprégnation, etc.

Le procédé selon l'invention peut s'effectuer entièrement en continu. Ainsi on peut opérer le trempage du feutre prélié directement après sa fabrication, puis utiliser le primitif directement pour l'opération de moulage, l'ensemble de ces opérations s'effectuant ainsi sans stockage intermédiaire. Ce procédé nécessite alors généralement plusieurs postes de moulage pour pouvoir écouler la totalité du primitif formé en amont.

Afin de rendre le procédé plus souple industriellement, on peut également réaliser l'invention en utilisant un stockage intermédiaire du feutre prélié.

Etant donné que le liant contenu dans le feutre est entièrement polymérisé, il n'existe pas de problème de vieillissement du feutre. En outre, ce feutre peut être comprimé sans inconvénient au moment du stockage.

On peut encore bien entendu prévoir un stockage intermédiaire du primitif imprégné.

L'opération de trempage est facilitée lorsqu'elle est effectuée sur un ruban continu du feutre prélié. En outre, on peut ainsi stocker sous forme de rouleaux, soit le feutre prélié, soit le primitif imprégné ou les deux.

Le liant utilisé pour le trempage contient une résine qui peut être choisie parmi les résines thermodurcissables telles les phénoplastes, les aminoplastes. De préférence, on utilise des résines phénoplastes qui présentent une bonne tenue à la température et à l'humidité, et qui, en outre, sont d'un coût réduit.

Avantageusement, le liant utilisé pour le trempage contient une résine phénoplaste choisie parmi le groupe des résines phénoplastes ayant un pH d'environ 1,5 à 3 et celles ayant un pH d'environ 8,5 à 12, ces dernières étant préférées du fait du caractère acide des premières. De telles résines montrent des caractéristiques de polymérisation intéressantes et notamment une température de réticulation relativement basse, de l'ordre de 150 à 180 °C et une durée de réticulation relativement brève, de l'ordre de 1 minute et demie à 2 minutes pour les épaisseurs des feutres et les grammages des fibres utilisés dans le cadre de l'invention. Ces propriétés réduisent encore les risques de détérioration au cours du moulage de la feuille de revêtement fragile, notamment en tissu. En outre l'utilisation de ces résines réduit la dépense en énergie.

Ces résines phénoplastes sont par exemple pour la résine de base une résine phénol-formaldéhyde de type résol modifiée à l'urée présentant par exemple un rapport moléculaire formaldéhyde/phénol compris entre 2 et 5, catalysée en milieu basique avec des hydroxydes alcalins ou alcalino-terreux, la résine étant neutralisée en fin de cycle à pH 7 par ajout d'acide sulfurique dilué. Pour les résines à pH d'environ 1,5 à 3, celui-ci a été ajusté par ajout d'eau et d'un acide à la résine de base, alors que pour les résines à pH d'environ 8,5 à 12, celui-ci a été ajusté par ajout d'eau et d'une base à cete résine.

Le trempage du feutre de fibres par le liant peut s'effectuer par passage du feutre dans un bain du liant. Avantageusement, notamment en raison de facilités de réalisation, le trempage s'effectue par un déversage du liant sur le feutre qui se déplace.

Le trempage s'effectue en vue d'obtenir un primitif ayant un taux de liant de l'ordre de 10 à 30% de l'extrait sec total. A cet effet on peut utiliser des compositions de liant ayant une viscosité proche de celle de l'eau.

Le feutre à partir duquel on prépare le primitif peut être un feutre de fibres de verre, de roche, de laitier ou de toutes autres fibres discontinues qui résistent aux températures de moulage. Le taux de liant polymérisé qu'il contient avant le trempage correspond par exemple à environ 2,5% du poids du feutre.

Sous un des aspects de l'invention, on place entre le primitif et la feuille de revêtement d'aspect, un adhésif thermoplastique sous forme d'un film et avantageusement d'une grille. L'adhésif thermoplastique améliore l'adhésion entre le primitif et la feuille de revêtement d'aspect, et la grille thermoplastique est d'un coût inférieur au film.

L'adhésif thermoplastique peut être placé au moment de la mise en place pour l'assemblage des éléments constitutifs du panneau composite. On peut également réaliser un préassemblage du primitif avec l'adhésif dans le but notamment de faciliter la préhension et les manipulations du primitif.

L'adhésif thermoplastique est choisi parmi ceux dont la température de fusion est compatible avec les conditions opératoires, c'est-à-dire inférieure à la température de moulage. On utilise par exemple du polyéthylène.

La feuille de revêtement d'aspect peut être à base d'un tissu velours, d'un polyamide, d'un polyester par exemple.

Selon une forme préférée de l'invention, le trempage par le liant du feutre prélié est suivi d'un essorage par pression et/ou par succion, puis d'un séchage par de l'air chaud, par exemple entre 80 et 100 °C, se déplaçant à une vitesse de l'ordre d'environ 10 m/s, à travers le feutre, dans le but d'obtenir un primitif contenant peu d'eau résiduelle, c'est-à-dire de l'ordre de 5% et moins en poids par rapport au poids total de celui-ci. Il s'en suit que les calories apportées au moment du moulage sont utilisées essentiellement pour la polymérisation du liant contenu dans le primitif et le collage de la feuille de revêtement avec celui-ci. Bien entendu le séchage décrit ci-dessus ne doit pas provoquer une polymérisation prématurée du liant contenu dans le primitif.

Sous un autre aspect de l'invention, on effectue le moulage en une seule passe d'un panneau présentant en outre une feuille de revêtement extérieure, c'est-à-dire orientée vers le pavillon du véhicule, et qui a généralement pour rôle de faciliter la préhension du panneau moulé, de le rigidifier et d'éviter le contact direct avec les fibres. Cette feuille de revêtement extérieure peut être à base d'un film synthétique, d'un tissu non tissé, d'un film métallique ou d'un film composite.

La température utilisée pour le moulage selon l'invention est généralement inférieure à 180°C du côté de la feuille de revêtement d'aspect. Du côté opposé, la température peut être plus élevée, de l'ordre de 250°C et sans risque de détérioration de la feuille de revêtement d'aspect, tout en permettant une polycondensation plus rapide de la résine.

Selon une forme préférée de l'invention, on souffle de l'air chaud à travers le primitif au moment du moulage, en vue d'accélérer la polymérisation du liant et ainsi de réduire encore la durée de l'opération de moulage.

L'invention concerne également une ligne de fabrication de panneaux composites moulés. Cette ligne comprend un dispositif d'encollage par trempage permettant d'obtenir un primitif selon l'invention et un dispositif de moulage avec une presse équipés de deux plateaux chauffants pour la mise en œuvre du moulage. Une réalisation de ces dispositifs est décrite par la suite en relation avec les figures.

L'invention concerne encore le primitif encollé au trempage en tant que produit intermédiaire et susceptible d'être utilisé pour la mise en œuvre du procédé de moulage selon l'invention.

La figure 1 représente un dispositif de trempage pour un feutre en vue dé fabriquer un primitif selon l'invention.

La figure 2 représente un détail du dispositif de la figure 1.

La figure 3 représente un dispositif de moulage pour la réalisation du panneau composite final.

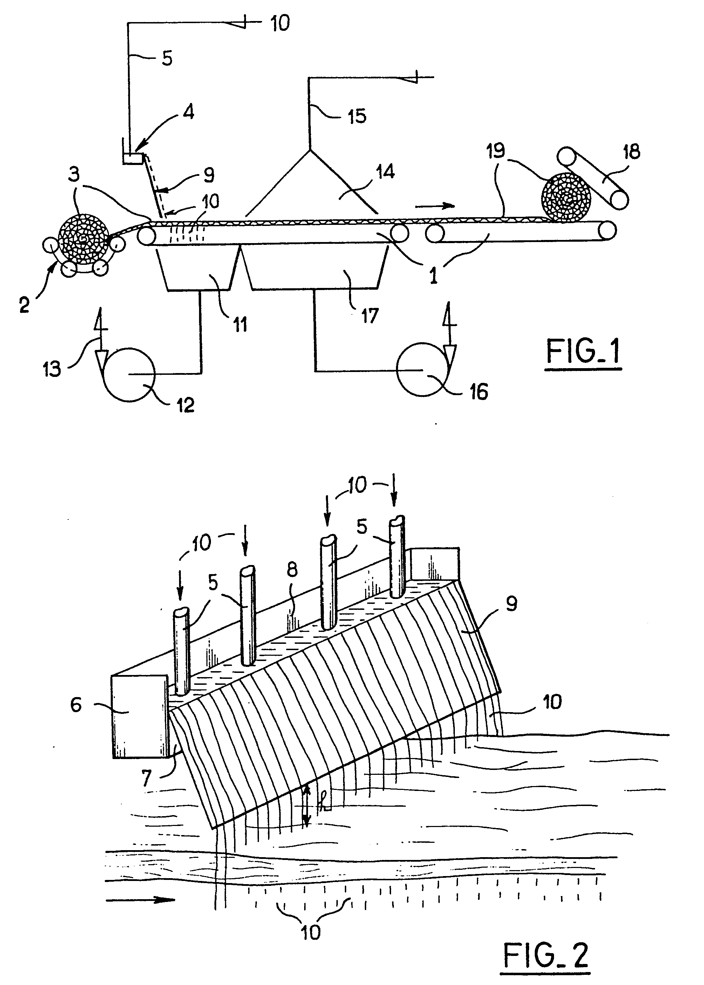

Le dispositif de trempage représenté sur les figures 1 et 2 comprend un convoyeur à mailles 1, entraîné par des rouleaux pour le transfert du feutre durant l'opération d'imprégation, en amont duquel est disposé un dévidoir 2 pour le feutre à imprégner 3 qui contient déjà environ 2,5% en poids de liant polymérisé. Disposé au-dessus de la partie avant du convoyeur, un déversoir 4 est alimenté de façon continue par du liant non polymérisé, à l'aide de conduits d'alimentation 5. Le déversoir est disposé transversalement par rapport au feutre à imprégner, il s'étend sur une largeur légèrement supérieure à celle du feutre, de façon à obtenir un trempage homogène de celui-ci sur toute sa largeur. Le déversoir comprend un réservoir horizontal 6 dont la paroi frontale avant 7, présentant une hauteur plus faible que celle de la paroi arrière 8, est prolongée par une tôle inclinée 9 par laquelle s'écoule le liant 10 sous forme d'une nappe. L'extrémité inférieure de la tôle inclinée est disposée à une distance h d'environ 50 millimètres du feutre à imprégner. Sous la partie avant du transporteur est disposé un bac 11 de récupération de l'excès de liant qui s'égoutte, auquel sont rattachés des moyens d'aspiration 12 tel un ventilateur assurant un essorage du feutre imprégné, et un système de recyclage 13 du liant. Disposé en aval du déversoir, au-dessus du transporteur, un caisson de soufflage vertical 14, envoie de l'air chaud arrivant par une canalisation 15 sur le feutre imprégné. Cet air chaud qui traverse le feutre 3 pour le sécher, est aspiré par des moyens d'aspiration tels un ventilateur 16 associé à un caisson d'aspiration 17 disposé sous le caisson de soufflage 14 puis, est recyclé. En aval du convoyeur 1, est disposé une enrouleuse 18 pour la mise en rouleau du primitif 19 obtenu. A la sortie du dispositif de trempage, le primitif présente une teneur en eau de l'ordre de 5% et moins en poids. La partie où est effectuée l'essorage du feutre présente une longueur par exemple d'environ 0,80 m alors que la partie où est effectuée le séchage présente une longueur double environ. Bien entendu, ces longueurs dépendent notamment de la vitesse d'entraînement du feutre qui est par exemple de l'ordre de 2 mètres par minute.

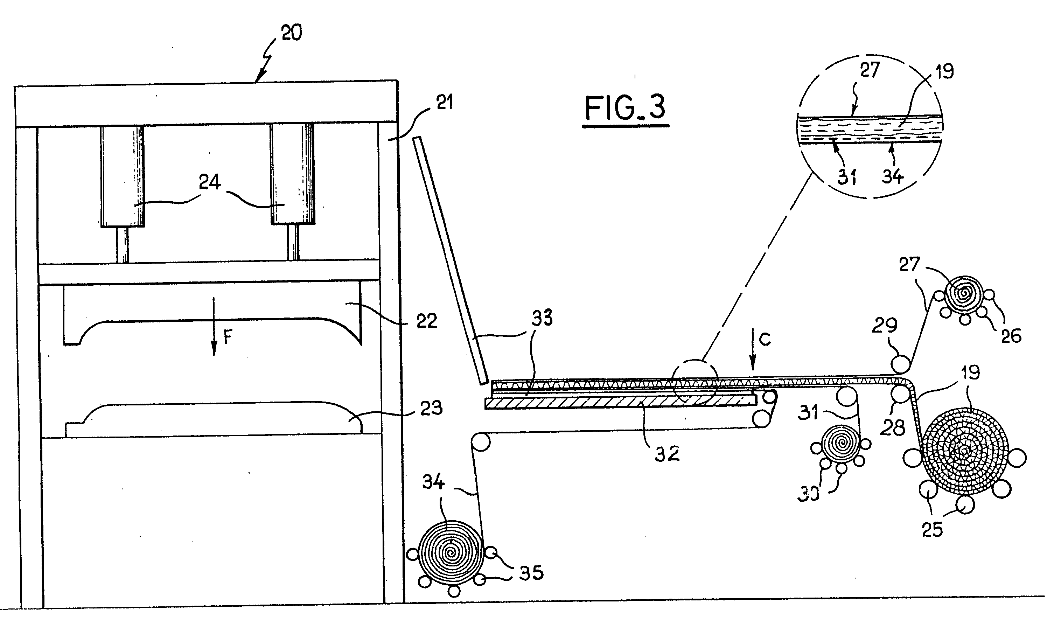

Le dispositif de moulage représenté sur la figure 3 comprend une presse 20 comportant un bâti 21, deux plateaux chauffants 22 et 23. Le plateau supérieure 22 est monté sur des vérins hydrauliques 24 et peut ainsi se rapprocher selon la flèche F ou s'éloigner du plateau inférieur fixe 23.

A l'entrée du dispositif de moulage, celui-ci comprend un premier dévidoir 25 pour le primitif 19 et un second dévidoir 26 pour une feuille de revêtement extérieure 27. Il comprend une paire de rouleaux 28, 29 pour un préassemblage du primitif 19 avec la feuille de revêtement extérieur 27. Un troisième dévidoir 30 distribuant une grille en polyéthylène 31 est disposé sous le primitif préassemblé, en amont d'une table d'assemblage 32 où s'effectue la mise en place dans un cadre 33 du primitif préassemblé, que l'on superpose à une feuille de revêtement d'aspect 34, distribuée par le dévidoir 35 placé sous la table d'assemblage 32.

Un dispositif de découpe C du primitif, des feuilles de revêtement et de la grille de polyéthylène est disposé en amont de la table d'assemblage.

Bien entendu, selon que le produit moulé désiré comporte ou non une feuille de revêtement extérieure ou bien que l'adhésion de la feuille de revêtement d'aspect avec le primitif nécessite ou non l'utilisation d'une grille de polyéthylène, on peut utiliser tout ou parties du dispositif décrit précédemment.

Dans une réalisation non représentée du dispositif de moulage, celui-ci comporte des moyens annexes de soufflage, et un au moins des plateaux de la presse est percé d'orifices permettant le soufflage à travers tout ou partie du panneau composite.

D'autres avantages et caractéristiques de l'invention apparaîtront dans les exemples décrits ci-après.

Le premier exemple est un exemple témoin qui par comparaison avec les exemples suivants met en évidence les avantages de l'invention.

Exemple 1

Un feutre de fibres de verre discontinues présentant une masse surfacique de 1350 g/m$^2$ est imprégné au cours de sa formation d'un liant comprenant une résine phénoplaste de pH 6–7, par pulvérisation d'une solution de ce liant. L'extrait sec de la solution est ajusté à 25% par dilution d'eau. La résine phénoplaste est modifiée à l'urée et elle est préparée selon un rapport moléculaire formaldéhyde/phénol égal à 3 en présence d'hydroxyde de baryum en tant que catalyseur; elle est neutralisée en fin de cycle à pH 6–7 par ajout d'acide sulfurique dilué. La résine phénoplaste est modifiée à l'urée et elle en contient environ 50%. Le primitif obtenu est placé sur une feuille de revêtement d'aspect en tissu suédine. L'ensemble est placé dans une presse. Le pressage est effectué à butée pour obtenir un produit moulé d'environ 6 mm d'épaisseur moyenne. La durée du pressage est d'environ 3 minutes, le plateau de la presse du côté du primitif étant porté à 240 °C alors que celui du côté de la feuille de revêtement est porté à 150 °C. Le produit moulé obtenu a des propriétés mécaniques correctes, notamment une bonne rigidité, mais il présente des tâches du côté du revêtement d'aspect en tissu. Ces tâches sont dues à des accumulations du liant, inhérentes à la pulvérisation de ce produit comme indiqué précédemment.

Exemple 2

Un feutre de fibres de verre discontinues pré-liées présentant une teneur en liant polycondensé de 2,5% en poids, et une masse surfacique de 1350 g/m$^2$ est imprégné d'un liant à base d'une résine phénoplaste de pH 6–7 par trempage et mise en œuvre du dispositif décrit précédemment en référence aux figures 1 et 2, en déversant sur lui une solution du liant décrite dans l'exemple 1 mais diluée par ajout d'eau pour obtenir environ 20% en poids d'extrait sec. La vitesse de déplacement du feutre est d'environ 2 m/mn. Le primitif imprégné est essoré, puis séché par succion et passage d'air chaud à environ 20 °C se déplaçant à environ 10 m/s jusqu'à ce qu'il présente une teneur en eau de l'ordre de 5% en poids. Le primitif est ensuite amené au dispositif de moulage décrit précédemment, où il est placé sur une feuille de revêtement d'aspect en tissu suédine. L'ensemble est placé dans la presse. Le pressage est effectué dans les mêmes conditions que dans l'exemple 1. Le produit moulé obtenu a une épaisseur moyenne d'environ 6 mm et il montre des propriétés mécaniques correctes. Aucune tâche n'est observable du côté du revêtement d'aspect en tissu.

Exemple 3

On opère dans les mêmes conditions que dans l'exemple 2, sauf qu'on réduit la durée du pressage à 2 minutes. On obtient un produit moulé d'aspect correct mais relativement mou dû à une polymérisation incomplète de la résine.

Exemple 4

On opère dans les mêmes conditions que dans l'exemple 3, sauf qu'on utilise un liant à base d'une résine phénoplaste de pH 9,2. Ce liant est obtenu par dilution et ajout de soude à la résine des exemples précédents pour ajuster le pH à 9,2. On obtient un produit moulé d'aspect et de rigidité correcte. La polycondensation est plus rapide que dans l'exemple 3 et une durée de 2 minutes pour le pressage est suffisante pour obtenir une polymérisation complète ou quasi complète.

Exemple 5

On opère dans les mêmes conditions que dans l'exemple 3, sauf qu'on utilise un liant à base d'une résine phénoplaste de pH 2. Cette résine est obtenue par dilution de la résine phénol-formaldéhyde de l'exemple 2 et ajout d'acide sulfurique jusqu'à pH 2. On obtient un produit moulé d'aspect et de rigidité correcte. Là encore la polymérisation du liant est plus rapide que dans l'exemple 3.

Exemple 6

On opère dans les mêmes conditions que dans l'exemple 4, sauf qu'on place un film de polyéthylène entre le primitif et la feuille de revêtement d'aspect en tissu. On obtient un produit moulé d'aspect et de rigidité correcte. En outre l'adhésion entre la feuille de revêtement d'aspect et le support est particulièrement forte.

Exemple 7

On opère dans les mêmes conditions que dans l'exemple 6, sauf qu'on place une grille de polyéthylène entre le primitif et la feuille de revêtement en tissu à la place d'un film de polyéthylène. Le produit moulé obtenu présente de bonnes caractéristiques mécaniques et un bon aspect, et l'adhésion obtenue entre la feuille de revêtement d'aspect et le support est forte.

Exemple 8

On opère dans les mêmes conditions que dans l'exemple 7, sauf qu'on place en outre sur le primitif une feuille de revêtement extérieure en tissu non tissé. Le produit moulé obtenu présente de bonnes caractéristiques mécaniques et un bon aspect, en outre il est facilement manipulable.

**Revendications**

1. Procédé de fabrication, par moulage en une seule passe, d'un panneau composite moulé comprenant un support en fibres discontinues de verre ou de roche, imprégnées d'un liant polymérisé et une feuille de revêtement d'aspect, caractérisé en ce qu'on prépare un primitif en imprégnant par trempage, par un liant non polymérisé en vue d'obtenir un primitif ayant un taux de liant de 10 à 30% en poids environ de l'extrait sec total, au moins une couche de fibres liées par un liant polymérisé, obtenue par pulvérisation sur les fibres d'une solution du liant non polymérisé au cours de la formation de la couche de fibres, suivie de la polymérisation du liant, le taux de liant polymérisé étant d'environ 2,5% en poids de la couche de fibres liées, qu'on place le primitif sur la feuille de revêtement d'aspect, qu'on presse le tout en chauffant pour obtenir le panneau composite par polymérisation du liant et collage des éléments entre eux.

2. Procédé selon la revendication 1 et 2, caractérisé en ce que le trempage s'effectue par un déversage du liant sur la couche de fibres pré-liées.

3. Procédé selon une des revendications 1 à 2, caractérisé en ce que le liant est à base d'une résine thermodurcissable.

4. Procédé selon la revendication 3, caractérisé en ce que la résine thermodurcissable est une résine phénoplaste.

5. Procédé selon une des revendications 1 à 4, caractérisé en ce que la résine phénoplaste est un résol modifié à l'urée, dont le rapport moléculaire formaldéhyde/phénol est avantageusement compris entre 2 et 5.

6. Procédé selon une des revendications 4 ou 5, caractérisé en ce que la résine phénoplaste est choisie parmi les résines phénoplastes présentant un pH d'environ 1,5 à 3 et celles présentant un pH d'environ 8,5 à 12.

7. Procédé selon la revendication 6, caractérisé en ce que la résine phénoplaste présente un pH de l'ordre de 9,2.

8. Procédé selon une des revendications 1 à 7, caractérisé en ce qu'on place un adhésif thermoplastique entre le primitif et la feuille de revêtement.

9. Procédé selon la revendication 8, caractérisé en ce que l'adhésif est sous forme d'une grille.

10. Procédé selon une des revendications 8 et 9, caractérisé en ce que l'adhésif thermoplastique est du polyéthylène.

11. Procédé selon une des revendications 1 à 10, caractérisé en ce qu'après le trempage de la couche de fibres par le liant, on sèche la couche de fibres imprégnées jusqu'à ce que la teneur en eau soit de l'ordre de 5% en poids et moins.

12. Procédé selon une des revendications 1 à 11, caractérisé en ce qu'on place une feuille de revêtement sur le côté du primitif opposé à la feuille de revêtement d'aspect.

13. Procédé selon une des revendications 1 à 12, caractérisé en ce qu'on chauffe les deux faces du panneau composite à des températures différentes au cours du moulage.

14. Procédé selon une des revendications 1 à 13, caractérisé en ce qu'on souffle de l'air chaud à travers tout ou partie du primitif au cours du moulage.

**Claims**

1. Method of manufacturing by moulding in a single pass, a moulded composite panel comprising a base formed from discontinuous glass or rock fibres, impregnated with a polymerized binder and a visible covering sheet, characterised in that an initial component is prepared by impregnation by soaking with a non-polymerized binder so as to obtain an initial component with a binder ratio of approximately 10 to 30% by weight of the total dry extract, at least one layer of fibres bonded with a polymerized binder, obtained by spraying on the fibres, a solution of the non-polymerized binder during the formation of the layer of fibres, followed by the polymerization of the binder, whereby the ratio of the polymerized binder is approximately 2.5% by weight of the layer of bonded fibres, that the initial component is placed on the visible covering sheet and that all the components are pressed accompanied by heating so as to obtain the composite panel by polymerization of the binder and bonding of the components between themselves.

2. Method according to claim 1 and 2, characterised in that the soaking operation is carried out by pouring binder on to the layer of prejoined fibres.

3. Method according to one of claims 1 to 2, characterised in that the binder is thermosetting resin-based.

4. Method according to claim 3, characterised in that the thermosetting resin is a phenolic plastic resin.

5. Method according to one of claims 1 to 4, characterised in that the phenolic plastic resin is a urea modified resol, the formaldehyde/phenol molecular ratio of which is advantageously between 2 and 5.

6. Method according to one of the claims 4 or 5, characterised in that the phenolic plastic resin is chosen from among the phenolic plastic resins with a pH value of approximately 1.5 to 3 and those with a pH value of approximately 8.5 to 12.

7. Method according to claim 6, characterised in that the phenolic plastic resin has a pH value of the order of 9.2.

8. Method according to one of the claims 1 to 7, characterised in that a thermoplastic adhesive is placed between the initial component and the covering sheet.

9. Method according to claim 8, characterised in that the adhesive is in the form of a grid.

10. Method according to one of the claims 8 and 9, characterised in that the thermoplastic adhesive consists of polyethylene.

11. Method according to one of claims 1 to 10, characterised in that after the soaking of the layer of fibres with the binder, the layer of impregnated fibres is dried until the water content is of the order of 5% by weight and less.

12. Method according to one of the claims 1 to 11, characterised in that a covering sheet is placed on the side of the initial component opposite the visible covering sheet.

13. Method according to one of the claims 1 to 12, characterised in that the two faces of the composite panel are heated at different temperatures during moulding.

14. Method according to one of claims 1 to 13, characterised in that hot air is blown through all or part of the initial component during moulding.

**Patentansprüche**

1. Verfahren zur Herstellung einer gepressten Verbundbauplatte durch Pressen in einem einzigen Durchgang, die eine Trägerplatte aus diskontinuierlichen Glas- oder Gesteinsfasern, welche mit einem polymerisierten Bindemittel imprägniert ist, und eine Sichtkaschierfolie enthält, dadurch gekennzeichnet, dass man einen Grundkörper herstellt, indem man durch Tauchen mit einem nichtpolymerisierten Bindemittel zur Erzielung eines Grundkörpers mit einem Gehalt an Bindemittel von etwa 10 bis 30% des gesamten Feststoffes wenigstens eine Faserschicht imprägniert, die mit einem polymerisierten Bindemittel gebunden ist und erhalten wurde durch Versprühen einer Lösung des nichtpolymerisierten Bindemittels auf die Fasern im Verlauf der Bildung der Faserschicht, gefolgt von der Polymerisation des Bindemittels, wobei die Menge des polymerisierten Bindemittels etwa 2,5 Gew.-% der gebundenen Faserschicht beträgt, dass man den Grundkörper auf die Sichtkaschierfolie aufbringt, dass man das ganze unter Erhitzen presst, um die Verbundbauplatte durch Polymerisation des Bindemittels und Verklebung der Einzelteile miteinander zu erhalten.

2. Verfahren nach Anspruch 1, dadurch gekennzeichnet, dass man das Tauchen durch Ausgiessen des Bindemittels auf die vorgebundene Faserschicht ausführt.

3. Verfahren nach einem der Patentansprüche 1 bis 2, dadurch gekennzeichnet, dass das Bindemittel auf der Grundlage eines wärmehärtbaren Harzes besteht.

4. Verfahren nach Anspruch 3, dadurch gekennzeichnet, dass das wärmehärtbare Harz ein Phenoplastharz ist.

5. Verfahren nach einem der Ansprüche 1 bis 4, dadurch gekennzeichnet, dass das Phenoplastharz ein mit Harnstoff modifiziertes Resol ist, dessen molekulares Verhältnis Formaldehyd/Phenol vorzugsweise zwischen 2 und 5 liegt.

6. Verfahren nach einem der Ansprüche 4 oder 5, dadurch gekennzeichnet, dass das Phenoplastharz aus den Phenoplastharzen, die einen pH von etwa 1,5 bis 3 und solchen, die einen pH von etwa 8,5 bis 12 besitzen, ausgewählt ist.

7. Verfahren nach Anspruch 6, dadurch gekennzeichnet, dass das Phenoplastharz einen pH in der Grössenordnung von 9,2 besitzt.

8. Verfahren nach einem der Patentansprüche 1 bis 7, dadurch gekennzeichnet, dass man einen thermoplastischen Klebstoff zwischen den Grundkörper und die Kaschierfolie aufbringt.

9. Verfahren nach Anspruch 8, dadurch gekennzeichnet, dass der Klebstoff in Form eines Netzes vorliegt.

10. Verfahren nach einem der Ansprüche 8 und 9, dadurch gekennzeichnet, dass der thermoplastische Klebstoff Polyethylen ist.

11. Verfahren nach einem der Ansprüche 1 bis 10, dadurch gekennzeichnet, dass man nach dem Tauchen der Faserschicht mit dem Bindemittel die Schicht der imprägnierten Fasern solange trocknet, bis der Wassergehalt im Bereich von 5 Gew.-% und weniger liegt.

12. Verfahren nach einem der Ansprüche 1 bis 11, dadurch gekennzeichnet, dass man eine Kaschierfolie auf die Seite des Grundkörpers aufbringt, die der Sichtkaschierfolie gegenüberliegt.

13. Verfahren nach einem der Ansprüche 1 bis 12, dadurch gekennzeichnet, dass man die zwei Aussenseiten der Verbundbauplatte während des Pressens auf verschiedene Temperaturen erhitzt.

14. Verfahren nach einem der Ansprüche 1 bis 13, dadurch gekennzeichnet, dass man Warmluft über den ganzen Grundkörper oder einen Teil im Verlauf des Pressens bläst.

0 112 210

$$\underline{FIG\_1}$$

$$\underline{FIG\_2}$$

9

FIG.3